# EUROPEAN PATENT SPECIFICATION

(11) **EP 4 287 689 B1**
(45) Date of publication and mention of the grant of the patent: **03.04.2024**
(21) Application number: 22176478.0
(22) Date of filing: 31.05.2022
(51) Int. Cl.: H04W 24/02

(54) **METHOD FOR USING A TERMINAL DEVICE IN A TELECOMMUNICATIONS NETWORK, WHEREIN, REGARDING A SPECIFIC USER EQUIPMENT FUNCTIONALITY, THE TELECOMMUNICATIONS NETWORK INITIALIZES OR PROVIDES A LOGICAL USER EQUIPMENT ENTITY OR FUNCTIONALITY, SYSTEM FOR USING A TERMINAL DEVICE IN A TELECOMMUNICATIONS NETWORK, TERMINAL DEVICE, PROGRAM AND COMPUTER-READABLE MEDIUM**
VERFAHREN ZUR VERWENDUNG EINES ENDGERÄTES IN EINEM TELEKOMMUNIKATIONSNETZ, WOBEI DAS TELEKOMMUNIKATIONSNETZ BEZÜGLICH EINER BESTIMMTEN BENUTZERGERÄTEFUNKTIONALITÄT EINE LOGISCHE BENUTZERGERÄTEEINHEIT ODER FUNKTIONALITÄT INITIALISIERT ODER BEREITSTELLT, SYSTEM ZUR VERWENDUNG EINES ENDGERÄTES IN EINEM TELEKOMMUNIKATIONSNETZ, ENDGERÄT, PROGRAMM UND COMPUTERLESBARES MEDIUM
PROCÉDÉ D'UTILISATION D'UN DISPOSITIF DE TERMINAL DANS UN RÉSEAU DE TÉLÉCOMMUNICATIONS, DANS LEQUEL, CONCERNANT UNE FONCTIONNALITÉ D'ÉQUIPEMENT UTILISATEUR SPÉCIFIQUE, LE RÉSEAU DE TÉLÉCOMMUNICATIONS INITIALISE OU FOURNIT UNE ENTITÉ OU UNE FONCTIONNALITÉ D'ÉQUIPEMENT UTILISATEUR LOGIQUE, SYSTÈME D'UTILISATION D'UN DISPOSITIF DE TERMINAL DANS UN RÉSEAU DE TÉLÉCOMMUNICATIONS, DISPOSITIF TERMINAL, PROGRAMME ET SUPPORT LISIBLE PAR ORDINATEUR

(43) Date of publication of application: 06.12.2023
(73) Proprietor: Deutsche Telekom AG, 53113 Bonn (DE)
(72) Inventor: LAUSTER, Reinhard, 3100 St. Pölten (AT); COLOM IKUNO, Josep, 2100 Korneuburg (AT)
(74) Representative: Schwöbel, Thilo K.

(56) References cited:
- WO-A1-2021/174189
- WO-A1-2021/187913
- WO-A1-2022/020770

## Description

### BACKGROUND

The present invention relates a method for using a terminal device in a telecommunications network, wherein the telecommunications network comprises an access network and a core network, wherein, regarding a specific user equipment functionality, the telecommunications network initializes or provides a logical user equipment entity or functionality.

Furthermore, the present invention relates to a system for using a terminal device in a telecommunications network, wherein the telecommunications network comprises an access network and a core network, wherein, regarding a specific user equipment functionality, the telecommunications network initializes or provides a logical user equipment entity or functionality.

Additionally, the present invention relates to a terminal device for being used in a telecommunications network, wherein, regarding a specific user equipment functionality, the telecommunications network is configured such that a logical user equipment entity or functionality is initialized or provided.

Furthermore, the present invention relates to a program and to a computer-readable medium for using a terminal device in a telecommunications network according to the inventive method.

The present invention relates to the area of telecommunications networks, especially wireless telecommunications networks or mobile communication networks. Such telecommunications networks or mobile communication networks typically comprise a multitude of different user equipments or terminal devices. Such conventionally used user equipments are typically comparatively complex and costly, due to always higher requirements regarding hardware and software. Likewise, such comparatively complex and costly user equipment devices tend to have shorter usage cycles, a higher battery consumption, and, hence, a comparatively high footprint in terms of resource requirements. In the context of offloading particular tasks from a user equipment to an entity in the network, document WO 2022/020770 A1 describes a method for enabling augmented computing with a compute control client at the terminal side, and a compute control function and a compute service function at the network side, wherein these entities form a "compute plane" for handling computing related control and user traffic. Document WO 2021/174189 A1 describes a wireless device sending a message to a session management function, wherein the message contains a combined request to establish a PDU session and to offload data processing to an application server. Document WO 2021/187913 A1 describes a method for performing edge application server discovery and establishing a corresponding PDU session with the application server.

### SUMMARY

An object of the present invention is to provide an effective and simple approach such that user equipments and/or terminal devices are potentially getting cheaper and less complex in hardware and software by means of a distributed deployment of user equipment functionality across a telecommunications network. Hereinafter, such a distributed deployment of user equipment functionality is also referred to by disaggregated services (or disaggregated functionality), i.e. disaggregated from the terminal device, and is able to be deployed, especially dynamically deployed, at the core network level and/or at the edge level and/or at the access network level of the considered telecommunications network, including cloud deployment - i.e. as instance, functionality or service in the telecommunications network of an operator. In the context of the present invention, especially configurations and customizations are possible regarding, or dependent on, the user equipment vendor, the network operator, the user profile and/or a third party; this enables a very resource saving and flexible implementation of terminal devices to be used in the telecommunications network.

The object of the present invention is achieved by a method according to claim1.

It is thereby advantageously possible, according to the present invention, that the user equipment or the terminal device (typically being a mobile device having a user interface to the user) is able to be provided having a less complex hardware and/or software configuration, and, hence, can be provided cheaper and/or based on longer updating and/or replacement cycles. The new approach according to the present invention - wherein certain functionalities (or services) (that are conventionally provided by a user equipment or mobile device) are realized or implemented by means of a distributed or disaggregated deployment of user equipment functionalities or services across the telecommunications network - advantageously enable operators of telecommunications networks to deploy user equipments and/or terminal devices in a more efficient, potentially cheaper and less complex manner regarding hardware and/or software, thereby, at least potentially, also leading to less frequent update and/or replacement cycles of such user equipments or terminal devices enabling resource saving and/or lowering of the environmental footprint in using such user equipments or terminal devices in such telecommunications networks as well as, potentially, enabling an increased battery lifetime and/or a reduce data transmission requirements, especially regarding the interface (especially an radio air interface) between the user equipment or terminal device towards the access network, especially due to less frequent software update requirements.

According to the present invention, the functionality of (especially the services provided by) a conventionally known user equipment (or mobile equipment) is at least partly provided or performed not inside the user equipment (or mobile equipment device or terminal device) but outside of the user equipment (mobile equipment device) or terminal device, i.e. at the core network level and/or at the edge level and/or at the access network level of the considered telecommunications network (that the user equipment or terminal device is connected to) and/or another user equipment or even of another telecommunications network (i.e. one to which the user equipment or terminal device is not directly connected to) or another user equipment of another telecommunications network. It is to be understood that, according to the present invention, this distributed or disaggregated deployment of user equipment functionality (especially user equipment services) across the respective telecommunications network does, typically, not extend to all the user equipment (or mobile equipment or terminal device) functionality or functionalities (or services), but typically only to a subset thereof, i.e. to a specific user equipment functionality or to a plurality of specific user equipment functionalities (or services), i.e. to at least one specific user equipment functionality (or service).

Regarding such a (or at least one) specific user equipment functionality (or service), the distributed or disaggregated deployment is realized, according to the present invention, by means of the telecommunications network initializing or providing a logical user equipment entity or functionality (especially as an instance or functionality provided by the telecommunications network, especially a network node thereof) such that the terminal device (or user equipment or mobile equipment device), together with the logical user equipment entity or functionality (of or located in (the network node of) the telecommunications network), provides or realizes or is able to provide or realize the (or the at least one) specific user equipment functionality (or service).

According to the present invention, providing or realizing the (or the at least one) specific user equipment functionality (or service) at least requires a logical user equipment identifier information being assigned to the terminal device (or user equipment), and the logical user equipment identifier information being transmitted to the terminal device (or user equipment). According to the present invention, by means of the logical user equipment identifier information, it is preferably and advantageously possible to identify and/or to reference (i.e. access) the logical user equipment entity or functionality that is used, together with the terminal device (or user equipment), to provide or to realize the (at least one) specific user equipment functionality. Hence, the logical user equipment identifier information is especially assigned not only to the terminal device (or user equipment) but likewise also to the logical user equipment functionality.

The telecommunications network (typically a mobile communication network) typically comprises an access network (typically a radio access network) and a core network, wherein the radio access network typically comprises a plurality of base station entities and corresponding radio cells in order to provide radio access to the telecommunications network for a certain number of devices or mobile devices, i.e. user equipments or terminal devices.

According to the present invention, by means of realizing a distributed deployment of user equipment functionality (or disaggregated services or functionality), it is advantageously possible to save data consumption and computing resources, as well as reducing user equipment complexity, hence boosting energy efficiency, but also to decouple the radio quality or radio resources of the user equipment or terminal device from application requirements thereof. This leads to a user equipment or terminal device having a longer usage cycle, with less hardware capability needs, less battery consumption and therefore a reduced footprint in terms of resource requirements, energy usage and complexity.

Hence, according to the present invention, it is advantageously possible to offload different user equipment functionalities depending on the used application or use-case. In the telecommunications network, such (offloaded) functionality can be more efficiently deployed (regarding the use of hardware and/or required power) and it is advantageously also possible that several capabilities are able to be shared by more than one user, potentially by all users. Therefore, disaggregation of services with a flexible and customized deployment will lead to overall decreased hardware capabilities, longer hardware life cycle and less battery consumption because of optimized resource usage in core (or access or edge) network instances of the telecommunications network. Additionally, current huge user equipment or terminal device data consumption due to software updates (e.g. of the operating system and/or of applications and/or the firmware) can be minimized; the remaining user equipment (or terminal device) functionality depends on usage and application scenario (e.g. optimized user interface transferred via control plane, mobility management).

Typically, conventionally known user equipments or mobile devices comprise not only functionalities related to providing the user interface and providing the data transmission capacity (i.e. components and/or circuitry related to a display element, radio components such as an antenna, etc.) but also functionalities and processing power related to other functionalities, applications and/or services.

Such conventionally known user equipments have grown more and more complex and costly - physically, but especially regarding the software components installed or stored on such mobile devices. Processing performance of conventional user equipments is typically required due to a multitude of different functionalities of the operating system and/or of a multitude of different software applications .

Due to the increased software and hardware complexity of such conventionally known user equipment, it is becoming more and more difficult and time consuming (as well as dangerous in case of insecure configuration settings) for an end-user of such devices to correctly and/or securely configure, update and/or administrate the complex ecosystem of different software components (being either natively part of the respective operating system or firmware of the devices and/or consisting of additional software components already provisioned for by the original equipment manufacturer of the devices and/or being additional software components installed by the end-user of the mobile device).

According to the present invention, it is advantageously possible to realize the functionality of a conventional user equipment or mobile device by means of realizing at least the specific user equipment functionality (or plurality thereof) by both the logical user equipment entity or functionality and the terminal device. The logical user equipment entity or functionality is realized by means of hosting or providing an instance, especially a virtual instance, typically within a network node of the telecommunications network, that is related to the respective terminal device, and together with the considered terminal device realizes the respective specific user equipment functionality. Such logical user equipment entities or functionalities are able to be flexibly created and customized, e.g. depending on customer profile or requirements, terminal device vendor profile or requirements, network operator profile or requirements and/or third party profile or requirements. Additionally, it is advantageously possible to add (and/or store and/or backup) user configuration or application data, which means that (possibly sensitive) user data are able to be stored (solely) in the telecommunications network (e.g. in a cloud environment of the telecommunications network) such that in case of theft of loss of the terminal device the user data are protected.

According to the present invention, the telecommunications network (i.e. especially its access network) is especially accessed, by the terminal device (or user equipment or mobile device), in a classical manner; however, what is acting (from the perspective of the telecommunications network or a third party instance) as the user equipment is in effect the combination of the terminal device and the logical user equipment entity or functionality, this combination being hereinafter also called the logical user equipment.

According to the present invention, in a step preceding the assignment of the logical user equipment identifier information to the terminal device, the terminal device transmits a disaggregation request message to the telecommunications network, the disaggregation request message being related to the specific user equipment functionality and/or requirements of the specific user equipment functionality (e.g. processing, latency, storage, connectivity to other services such as Internet),
wherein the logical user equipment identifier information is assigned, by a network node of the telecommunications network, especially of the core network of the telecommunications network, to the terminal device and transmitted to the terminal device depending on the requested disaggregation of the specific user equipment functionality (and optionally depending also on a profile information related to the terminal device and/or to the respective subscription), and wherein the telecommunications network, especially the core network of the telecommunications network, assigns or defines a location or a resource for implementing or realizing the disaggregation of the requested specific user equipment functionality,
wherein the telecommunications network informs the terminal device about disaggregated services and push this information to the upper application layer,
wherein a temporary identity is assigned to the disaggregated specific user equipment functionality, the temporary identity being related to or combined with the logical user equipment identifier information.

By means of the terminal device transmitting the disaggregation request message, it is advantageously possible, according to the present invention, to realize or to provide the specific user equipment functionality (using the terminal device together with the logical user equipment entity or functionality) in a flexible manner, i.e. it is not required that each and every user equipment functionality of the terminal device is offloaded (or disaggregated) but only a part thereof; furthermore, such a request (by the terminal device) is granted or allowed by the telecommunications network depending on a profile information related to the terminal device and/or to the specific user equipment functionality requested to be disaggregated; the telecommunications network assigns a location for the disaggregated services (or the logical user equipment entity or functionality), informs the terminal device about the disaggregated services and pushes this information to the upper application layer. Regarding the disaggregated services, a new temporary, identity (i.e. the logical user equipment identifier information) is assigned and combined with the original terminal device identity.

According to the present invention, it is furthermore (alternatively or cumulatively to the previously mentioned advantageous embodiment) advantageously possible and preferred that, regarding the specific user equipment functionality, the logical user equipment entity or functionality is initialized or provided in view of being able to provide or realize, together with the terminal device, the requested specific user equipment functionality,
wherein, in a third step subsequent of the second step, the logical user equipment entity or functionality enters a functional state corresponding to a specific context information related to the requested specific user equipment functionality,
wherein in a fourth step subsequent to the third step and especially upon a re-registration of the terminal device, the specific context information is used to establish the functional state of the requested specific user equipment functionality such that the terminal device, together with the logical user equipment entity or functionality, provides or realizes the specific user equipment functionality,
wherein the specific context information is especially stored in a context database of or associated with the telecommunications network.

By means of the functional state of the logical user equipment entity or functionality and/or by means of the specific context information related to the requested specific user equipment functionality, it is advantageously possible, according to the present invention, for the telecommunications network to take care of a functional state of the terminal device, even though the terminal device might be temporarily disconnected from the telecommunications network.

According to the present invention, the logical user equipment identifier information comprises
-- a network identifier information, especially a public land mobile network identifier and/or a network identifier,
-- a permanent equipment identifier information related to the terminal device, especially an international mobile equipment identity, and
-- an identifier information relating to the logical user equipment entity or functionality (i.e. the respective instance thereof),
wherein especially, the logical user equipment entity or functionality is identified by means of a functionality instance identifier information, the functionality instance identifier information comprising the logical user equipment identifier information and a functionality identifier information, the functionality identifier information especially referring to the specific user equipment functionality.

Thereby the logical user equipment identifier information comprises a reference to the respective telecommunications network, especially the one providing the logical user equipment entity or functionality, and especially the home network of the terminal device. Furthermore, the logical user equipment identifier information comprises a reference to the terminal device (by means of the permanent equipment identifier information), and to the logical user equipment entity or functionality.

According to the present invention, it is furthermore advantageously possible and preferred that the specific user equipment functionality is localized in the access network or in the core network of the telecommunications network,
wherein in case that the specific user equipment functionality is localized in the access network, especially in a base station entity of the access network and especially using the N3 interface, a protocol data unit session is terminated at the access network,
wherein in case that the specific user equipment functionality is localized in the core network, a protocol data unit session is not required,
wherein the specific user equipment functionality especially is or corresponds to a session management functionality, especially a user plane-related functionality.

According to the present invention, it is thereby advantageously possible that the inventive method is able to be performed in a flexible and efficient manner.

According to the present invention, it is furthermore advantageously possible and preferred that the specific user equipment functionality is realized by means of pooling, for the terminal device and at least one further terminal device, of the logical user equipment entity or functionality.

By means of being able to pool the logical user equipment entity or functionality such that the specific user equipment functionality is able to be realized not only for or regarding the terminal device but also for the further terminal device (or even for a plurality of further terminal devices), it is advantageously possible, according to the present invention, to even further enhance the flexibility and efficiency by implementing the inventive method.

According to the present invention, it is furthermore advantageously possible and preferred that the specific user equipment functionality is realized by means of using, in addition to the telecommunications network, a further telecommunications network or at least a further core network of a further telecommunications network.

According to the present invention, it is thereby advantageously possible that the inventive method is able to be performed in a flexible and efficient manner.

According to the present invention, it is furthermore advantageously possible and preferred that the logical user equipment entity or functionality is related to the terminal device and to a further terminal device,
wherein the logical user equipment entity or functionality provides or realizes the specific user equipment functionality together with the terminal device, and a further specific user equipment functionality together with the further terminal device.

According to the present invention, it is thereby advantageously possible that the inventive method is able to be performed in a flexible and efficient manner.

According to the present invention, it is furthermore advantageously possible and preferred that the specific user equipment functionality corresponds to a functionality that the terminal device is unable to provide or realize without the logical user equipment entity or functionality.

Furthermore, the present invention relates to a system according to claim 12.

Thereby, it is advantageously possible to provide a system that is capable of being flexibly used such that the user equipment or the terminal device, i.e. the mobile device having a user interface to the user, can be provided much cheaper and also less complex in hardware and software.

Furthermore, the present invention relates to telecommunications network according to claim 10, a terminal device according to claim 11, and a system according to claim 12.

Additionally, the present invention relates to a program according to claim 13 and a computer-readable medium according to claim 14.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network comprising an access network, a core network and a terminal device user equipment, wherein the core network typically comprises a number of network functions or services, such as a policy and charging function, the policy and charging function typically being is configured to transmit user equipment route selection policy information to the user equipment.
Figure 2 schematically illustrates a communication diagram showing a registration process with a disaggregated functionality.
Figures 3 and 4 schematically illustrate, respectively, a communication diagram showing a registration process involving a further telecommunications network.
Figure 5 schematically illustrates a communication diagram showing a context storage for a disaggregated functionality.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

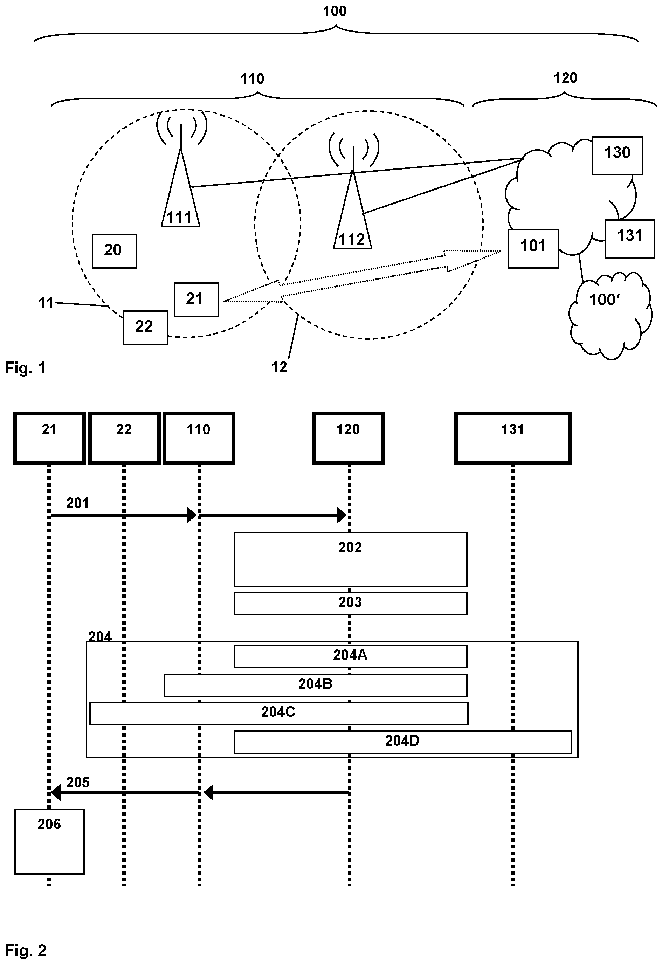

In Figure 1, a telecommunications network 100 comprising an access network 110, and a core network 120 is schematically shown. The telecommunications network 100, especially the core network 120, typically comprises a number of network functions or services, such as a policy and charging function 130. The access network 110 comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. The telecommunications network 100 typically is connected to a plurality of user equipments 20, one of which is schematically shown in Figure 1.

In addition to the user equipment 20, Figure 1 also shows a terminal device 21. The terminal device 21 might be a user equipment equal or similar to user equipment 20; however, according to the present invention, regarding a specific user equipment functionality (of the terminal device 21), a logical user equipment entity or functionality is invoked such that the terminal device 21, together with the logical user equipment entity or functionality provides or realizes or is able to provide or realize the specific user equipment functionality, i.e. in a disaggregated manner. This is why the term terminal device 21 is predominantly used, throughout this disclosure, to denote the possibility of such disaggregated functionality according to the present invention. The logical user equipment entity or functionality (or logical user equipment entity or functionality instance) is initialized or provided by the telecommunications network 100 and is designated by means of reference sign 101; an arrow between the terminal device 21 and the logical user equipment entity or functionality (instance) 101 is schematically shown, in Figure 1, in order to illustrate a relationship between the (specific) terminal device 21, and the (specific) logical user equipment entity or functionality (instance) 101.

The user equipment 20 and the terminal device 21 are typically, but not necessarily, mobile i.e. able to move with respect to the (typically, but not necessarily, static) radio cells 11, 12 or corresponding base station entities 111, 112 of the access network 110. In the exemplarily represented illustration of Figure 1, the core network 120 comprises or is connected to a data network 131 (or edge system or third party entity or server). The core network 120 provides the terminal device 21 (and the user equipment 20) with data connectivity towards the data network 131.

Figure 1 primarily shows the simple situation that the terminal device 21 is connected to its home network 100, especially its home public land mobile network, i.e. the telecommunications network 100 represented in Figure 1 corresponds to the home network of the user equipment 20. In any case, the terminal device 21 is connected using access network 120, typically a radio access network.

In case this access network 120 does not correspond to (or belong to) the home network or home public land mobile network of the terminal device 21 (i.e. in case the telecommunications network 100 is not the home network of the terminal device 21), the access network 120 to which the terminal device 21 is connected is called the visited network or visited public land mobile network of the terminal device 21; and in this case, the terminal device 21 is typically also connected to its home network 100', or to the core network of its home network 100'.

The logical user equipment entity or functionality (instance) 101 is especially realized or instantiated by or at a network node (not specifically shown in Figure 1) of the telecommunications network 100 (either as part of the access network 110 or as part of the core network 120 of the telecommunications network, or, alternatively (but not shown in Figure 1) as part of a network edge of the telecommunications network 100 or as part of a cloud environment), typically by means of hosting or providing a user equipment-related virtual instance. Together, both the terminal device 21 and the logical user equipment entity or functionality (instance) 101 realize the specific user equipment functionality.

According to the present invention, the combination of the terminal device 21 and the logical user equipment entity or functionality (instance) 101 is enabled to realize the specific user equipment functionality of the terminal device to be disaggregated on request by the terminal device 21.

Hereinafter, such a distributed or disaggregated deployment of user equipment functionality (of the terminal device 21) is also referred to by disaggregated services (or disaggregated functionality), i.e. disaggregated from the terminal device 21, and is able to be deployed, especially dynamically deployed, at the core network 120 level and/or at the edge level and/or at the access network 110 level of the considered telecommunications network.

Conventionally known fixed or especially mobile user equipments typically have a very high effort on hardware and software. This almost incredible need on hardware and software resources is required due to the various usage scenarios and the variety of applications and functionality a typically user equipment has to support. As such a user equipment has everything for service termination included, it must be frequently adopted or updated (software and hardware updates) to the fast-developing software and internet service world. Therefore, the resource requirements and energy consumption are very high. Additionally, the usage cycle is short and consequently the ecological footprint is comparatively high.

According to the present invention, the different user equipment capabilities (of the terminal device 21) are provided to the telecommunications network 100 as part of the registration request of the terminal device 21 towards the telecommunications network 100 (typically towards the core network 120). Such identifiers (or such information) convey, to the telecommunications network 100, information regarding the capabilities of the terminal device 21 (i.e. what features/functionalities the terminal device 21 is capable to fulfill); examples include user equipment radio capabilities, user equipment mobility management core capability, closed access group (CAG) support, S1 network capabilities. User equipment capabilities (of the terminal device 21) are stored in contexts across the core network 120 depending on the type of information, e.g. CAG-related information is relevant to the access and mobility management function.

The identifier known as PEI (permanent equipment identifier, cf. 3GPP TS 23.501), known in pre-5G systems as IMEI, international mobile equipment identifier, allows for the univocal identification of a user equipment device, i.e. the terminal device 21.

According to the present invention the terminal device 21, or its functionalities, are able to be decomposed in several functionalities; hence, these functionalities are able to be deployed across the network, i.e. disaggregated. A (specific) user equipment functionality deployed in such a way could also be called by the term logical user equipment.

Hence, the functionality of such a logical user equipment (i.e. the specific user equipment functionality being provided or realized by both the terminal device 21 and the logical user equipment entity or functionality 101) can thus be spread across the network.

Regarding the distribution of a plurality of user equipment functionalities between the terminal device 21 on the one hand, and their realization by the telecommunications network (i.e. by means of one or a plurality of logical user equipment entity or functionality (instance(s)) 101), the disaggregation could be realized such that only a base functionality (with reduced complexity) would remain at the terminal device 21, i.e. such a base functionality is, in principle, all that is (necessarily, due to the interaction with the user equipment of the terminal device 21) required from the terminal device 21 (or physical user equipment), although, according to other embodiments or examples of such distributions of user equipment functionalities, specific functionalities (or parts thereof) could be left at the terminal device 21, i.e. the physical user equipment, while clearly-defined parts (i.e. the specific user equipment functionality) of the (physical user equipment) functionality are explicitly placed outside of the terminal device 21. Furthermore according to the present invention, the specific user equipment functionality is realized or provided by means of, at least, assigning (by the telecommunications network 100 or by a disaggregation control entity or functionality thereof) the logical user equipment identifier information to the terminal device 21, and by means of transmitting the logical user equipment identifier information to the terminal device 21; by means of using, according to the present invention, the logical user equipment identifier information, it is advantageously possible according to the present invention to not only be able to offload (or disaggregate) the (specific user equipment) functionality but especially to be able to individually address each offloaded functionality (and/or to individually route traffic regarding each offloaded functionality), and especially provide or realize a differentiation (e.g. regarding identifiers) between a "normal UE" (such as user equipment 20 shown in Figure 1) and a "disaggregated UE" (such as terminal device 21 shown in Figure 1) with offloaded functionality.

Hence according to the present invention, the user equipment functionality or parts thereof are able to be located (or provided) at the physical user equipment itself (i.e. the terminal device 21), at the access network and/or at the core network of the telecommunications network 100, and the logical user equipment is, hence, able to be "spread" (or, at least partly, disaggregated) among these entities or parts of the telecommunications network, e.g. a 5G system.

Such a distribution of user equipment functionality might especially be provided in a manner such that:
-- functionalities having or requiring a higher degree of complexity (especially computationally more demanding functionalities) could preferably be located in (or disaggregated towards) the core network 120,
-- functionalities having or requiring a medium degree of complexity could preferably be located in (or disaggregated towards) the (radio) access network 110, and
-- functionalities having or requiring a lower degree of complexity (base functionalities, especially functionalities requiring a heavy or frequent or rather instantaneous (or low latency) user involvement or user interaction) could preferably remain be located in the physical user equipment or terminal device 21.

Hence, the terminal device 21 (or physical user equipment) could be assumed to provide a base functionality (or at least a base functionality), and the residual user equipment functionalities is able to be totally or partially deployed at the (radio) access network 110 and/or the core network 120, or even at another (or further) physical user equipment (i.e. a second physical user equipment or terminal device, designated by means of reference sign 22 in Figure 1), or on a location accessible via a data network 130, e.g. an edge application server.

From outside of the telecommunications network 100, especially a 5G system, a "traditional user equipment" (user equipment 20) and a logical user equipment (comprising the terminal device 21 as well as the logical user equipment entity or functionality 101) are indistinguishable.

According to the present invention, it is made possible by means of the terminal device 21 using a disaggregation request message that the terminal device 21 is able to request (e.g. at network registration/while registered at a network) the deployment (or disaggregation) of a specific (user equipment) functionality (or a plurality thereof). In turn, the telecommunications network 100 is advantageously able to use operator-specific logic (e.g. optimized mobility procedures) to the terminal device 21, and (user equipment) functionality, deployed in the telecommunications network 100, can be upgraded by the telecommunications network 100.

It is also made possible by the present invention, that, for a given (user equipment) functionality, the deployment of a partial part of the functionality is performed in the user equipment, while the rest of that (user equipment) functionality (e.g. a computationally heavy part, such as artificial intelligence/machine learning) is performed within the network.

In order for the network to be able to route incoming traffic and/or generated signaling towards the respective destination where a considered specific user equipment functionality is actually hosted or located, the logical user equipment identifier information is used for identification purposes (e.g. at network registration) that a given terminal device 21 (or user equipment 20) supports being deployed as a logical user equipment and/or regarding the knowledge (especially at the core network 120) of where each component (of the logical user equipment) is placed (either a precise location of the functionality or with a granularity of at which part the respective component is placed, i.e. at the physical user equipment and/or at the (radio) access network and/or a the core network and/or at a data network).

According to the present invention, when registering with the telecommunications network 100, the terminal device 21 (capable of logical user equipment operation) can register as a logical user equipment. Most importantly, the user equipment includes some of the following:
-- Logical user equipment capability (i.e. a specific user equipment functionality) which is able to be offloaded (or disaggregated) at the network (e.g., to save resources in the physical user equipment, or terminal device 21);
-- Logical user equipment capability which is mandated to be offloaded at the network (e.g., the physical user equipment (or terminal device 21) needs this functionality, but it cannot run it itself);
-- information or pieces of information regarding its own computational capabilities (e.g., to aid the network in deciding how many user equipment functionalities are able to be deployed at the physical user equipment or terminal device 21). Hence, the (radio) access network 110 and the core network 120 are aware of what user equipments 20 or terminal device 21 are "normal UEs" (user equipment 20) and which ones are logical user equipments (terminal device 21).

According to the present invention (and opposed to conventionally known user equipments such as user equipment 20), a logical user equipment is primarily related to the telecommunications network 100 it is attached to, i.e., together with its associated (disaggregated) user equipment functionality; hence, according to the present invention, a logical user equipment identifier information (also referred to as LUI) is assigned, by the telecommunications network 100, to the physical user equipment or terminal device 21; this logical user equipment identifier information is used to identify the logical user equipment.

According to a preferred embodiment of the present invention (and as either an alternative to the other embodiments disclosed or cumulatively to one or a plurality of other embodiments disclosed), pieces of logical user equipment identifier information are able to be mapped to generic public subscription identifiers, GPSI (i.e. external identifier outside of the network) so that it is transparent from outside of the network whether a user equipment is a logical user equipment or not.

According to another preferred embodiment of the present invention (and as either an alternative to the other embodiments disclosed or cumulatively to one or a plurality of other embodiments disclosed), not all subscriptions may be allowed to deploy user equipment functionality in the network. The network may only allow the registration as logical user equipment if (for the given subscriber) the network contains subscriber information allowing the use of this capability.

According to another preferred embodiment of the present invention (and as either an alternative to the other embodiments disclosed or cumulatively to one or a plurality of other embodiments disclosed), in order for incoming/outgoing messages being addressed to a given functionality (e.g. session management signaling, user plane data packets), an association is provided between a logical user equipment and its functionality that includes where each functionality is placed; in this respect: While the granularity of the stored information can vary (e.g. for the CN it is enough to know that a functionality resides in RAN, while for RAN the specific RAN element, e.g. gNB ID, would be required), mappings are considered on all possible functionality locations: physical UE, (radio) access network, core network, edge locations.

It is especially advantageous that a logical user equipment identifier information is able to be associated to a subscribe identifier information, thus linking existing service authorization mechanisms to the logical user equipment in the same way as with a normal user equipment.

In Figure 2, a communication diagram showing a registration process with a disaggregated functionality is schematically shown. The communication diagram schematically shows the communication between the terminal device 21, the further terminal device 22, the (radio) access network 110, the core network 120, and the data network/third party network 131.

In a first processing step 201, at the registration step of the terminal device 21 or physical user equipment (UE registration), the terminal device 21 requests - by means of a disaggregation request message - functionality to be provided by the network; registration/authorization is handled by the core network 120, as is the distribution of disaggregated specific user equipment functionality.

In a second processing step 202, the core network 120, based on subscription information, evaluates whether the subscriber (of the terminal device 21) is allowed to deploy such functionality and if yes, to what degree (e.g. only some subscribers may be allowed to deploy in the low-latency access network 110). The core network 120 may decide to deploy all of the requested functionality (or, according to possibility not covered by the claimed invention, none of the requested functionality), only part of it, or additional functionality to the one explicitly requested by the terminal device 21 (e.g. default functionality that all user equipments receive, such as specific security-related functionality).

In a third processing step 203, the core network assigns a logical user equipment identifier information (LUI) to the registering terminal device 21. This identifier information represents the "functional UE" (or logical user equipment), i.e. the combination of functionality residing in the physical user equipment (terminal device 21) and outside of it that, as a whole, comprises the "full UE" (or logical user equipment). Based on the information provided by the terminal device 21 (e.g. what functionality is required and latency requirements for the given functionality), the functionality can be deployed (or assigned to the logical user equipment if the functionality is already available), in a fourth processing step 204, alternatively or cumulatively on the following locations:
-- within the core network 120: e.g. in the user plane function for a data processing function, in the session management function for session management function - cf. the first alternative schematically shown in box 204A related to the fourth processing step 204;
-- within the (radio) access network 110: e.g. in the gNB-DU for a low-latency mobility management functionality - cf. the second alternative schematically shown in box 204B related to the fourth processing step 204;
-- within another user equipment (other terminal device 22): e.g. for functionality that could be served in a mesh topology using a direct UE-to-UE communication (e.g. PC5), such as related to Proximity Services - cf. the third alternative schematically shown in box 204C related to the fourth processing step 204;
-- within a third party server entity 131: e.g. for functionality related to a cloud provider-cf. the fourth alternative schematically shown in box 204D related to the fourth processing step 204.

In each of the cases shown as part of the fourth step 204, available deployed user equipment functionality is associated to a functionality endpoint/identifier (e.g. an API endpoint for this specific functionality such as {logical_UE}/sm_service, or {logical_UE_ID}/{SMF_ID)/sm_service, or {logical_UE_ID}/{service_instance_ID}), such that messages towards a deployed UE functionality can be routed through the telecommunications network 100, especially a 5G system.

In a fifths processing step 205, the core network then includes (or transmits) the assigned logical user equipment identifier information and references to the deployed functionality to the terminal device 21, which can subsequently be used to access the available functionality (e.g. APIs).

In a sixth processing step 206, the terminal device 21 stores the logical user equipment identifier information and corresponding endpoint information.

In order for the core network 120 to be able to determine the functionality profile of a user equipment or terminal device 21 that is requesting (especially in the first above mentioned processing step 201) functionality to be provided by the network by means of disaggregation (i.e. how user equipment functionality is obtained prior to deployment), one of the following options or a combination of more than one of the following options are able to be implemented according to the present invention, especially as part of or prior to the fourth processing step 204 mentioned above:
-- the user equipment or terminal device 21 includes an identifier and/or a description of the functionality to be deployed (i.e. the specific user equipment functionality) and the core network 120 is able to retrieve said functionality from a repository, especially a functionality repository either as part of the telecommunications network 100 or, at least, accessible by the telecommunications network 100, e.g. a container repository;
-- the user equipment or terminal device 21 transmits the actual functionality to be deployed (i.e. the specific user equipment functionality) to the core network 120; this use case is considered for user equipments or terminal devices that may contain necessary storage but would not be able to run the actual logic: e.g. a pre-trained Machine Learning algorithm requiring considerable amounts of computing power and/or specialized hardware to run.

According to the present invention, it is especially assumed that user equipment functionality communicates with each other. This especially means that, e.g., the access and mobility management function (realized as part of the core network 120) communicates with a mobility function as part of the user equipment or terminal device 21; the session management function (realized as part of the core network 120) communicates with a session management (functionality) as part of the user equipment or terminal device 21; the mobility function and the session management (functionality), both part of the user equipment terminal device 21, communicate with each other; the policy and charging function (realized as part of the core network 120) communicates with a policy function as part of the user equipment or terminal device 21; a user plane function as part of the user equipment or terminal device 21 communicates both with the session management (functionality) and a machine-learning-based (ML-based) traffic shaping functionality as part of the user equipment or terminal device 21. In this example, the user plane functionality (realized as part of the core network 120) is complemented by the ML-based traffic shaping functionality which is trained with the incoming/outgoing traffic. The session management functionality is, e.g., used for augmented reality applications (i.e. requires low latency towards the network), and the ML-based application is able to be deployed in the user plane function, such that the user equipment or terminal device 21 is not required to contain specialized hardware for (re-)training of the ML-based algorithm or that the algorithm is not constrained by the processing power available at the physical user equipment or terminal device 21.

In the registration step, the logical user equipment identifier information is assigned by the (home) network because the user equipment or terminal device 21 as a whole can only exist in association to the network where its functionality is deployed. However, a common case in which interactions between networks is expected is roaming. For this and other cases, such as deployment of user equipment functionality across multiple networks, network registration using an existing logical user equipment identifier information is possible according to the present invention.

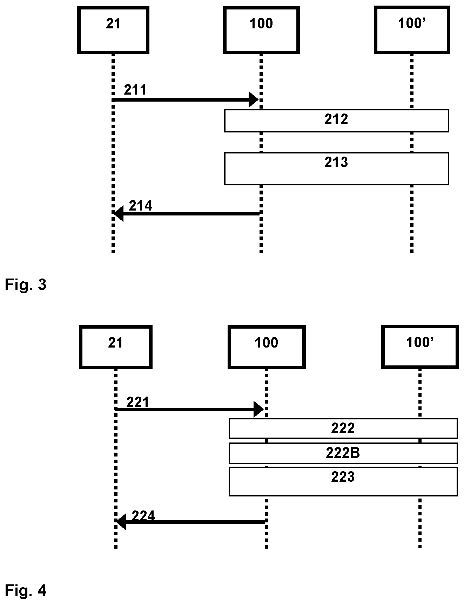

This is exemplarily shown in Figures 3 and 4 which schematically illustrate, respectively, a communication diagram showing a registration process involving a further telecommunications network, i.e. the user equipment or terminal device 21, the telecommunications network 100 and a further or home telecommunications network 100'.

Figure 3 exemplarily shows a network registration using an existing logical user equipment identifier information: The (logical) user equipment is associated with the home network 100' of the terminal device 21; in a first processing step 211, the terminal device 21 registers with the telecommunications network 100 and provides the existing logical user equipment identifier information to this telecommunications network 100, as well as its association with its home network 100'. According to the present invention, it is preferred that the logical user equipment identifier information comprises a reference to the home network of the terminal device 21, such as a network identifier (e.g. PLMN ID); in a second processing step 212, the telecommunications network 100 communicates with the home network 100' and authenticates/authorizes the logical user equipment identifier information; in a third processing step 213, the home telecommunications network 100' decides to move/redeploy the existing (disaggregated) functionality in the telecommunications network 100 (if telecommunications network 100 allows this); in this case, lower latency can be enabled if functionality is deployed in telecommunications network 100; additional functionality may also be deployed (e.g. roaming-related functionality); in a fourth processing step 214, the user equipment or terminal device 21 receives a registration accept message with an updated list of functionalities including endpoints.

A possible variant to such an embodiment is that a new logical user equipment identifier information is negotiated between the telecommunications network 100 and the home network 100', and is re-returned, resulting in the logical user equipment identifier information now being residing in more than one network. Such a logical user equipment identifier information may then contain more than one network identifier. Figure 4 exemplarily shows a corresponding example schematically:
Again, the (logical) user equipment is associated with the home network 100' of the terminal device 21; in a first processing step 221, the terminal device 21 registers with the telecommunications network 100 and provides the existing logical user equipment identifier information to this telecommunications network 100, as well as its association with its home network 100'. According to the present invention, it is preferred that the logical user equipment identifier information comprises a reference to the home network of the terminal device 21, such as a network identifier (e.g. PLMN ID); in a second processing step 222, the telecommunications network 100 communicates with the home network 100' and authenticates/authorizes the logical user equipment identifier information; furthermore, as part of the second processing step, in a processing step 222B, a re-assignment of the logical user equipment identifier information is performed; in a third processing step 223, the home telecommunications network 100' decides to move/redeploy the existing (disaggregated) functionality in the telecommunications network 100 (if telecommunications network 100 allows this); in this case, lower latency can be enabled if functionality is deployed in telecommunications network 100; additional functionality may also be deployed (e.g. roaming-related functionality); in a fourth processing step 224, the user equipment or terminal device 21 receives an updated list of functionalities including endpoints.

According to the present invention, several options are considered for identifying and addressing a logical user equipment and/or a disaggregated user equipment functionality:
The logical user equipment identifier information is "tied" to a given network, and as such the logical user equipment identifier information is considered to contain a network identifier related to that network, typically the "home network" of the user equipment or terminal device 21. The logical user equipment identifier information comprises
-- a network identifier information, especially a public land mobile network identifier and/or a network identifier,
-- a permanent equipment identifier information related to the terminal device (21), especially an international mobile equipment identity, and
-- an identifier information relating to the logical user equipment entity or functionality (101), especially an instance identifier regarding the logical user equipment entity or functionality (instance) 101. Especially, the logical user equipment identifier information is able to comprise more than one network identifier, i.e. network identifiers regarding more than one telecommunications network.

Likewise, a functionality identifier, which is in turn tied to a given logical user equipment, is considered to contain the logical user equipment identifier information.

As endpoint for addressing a given logical user equipment functionality (instance) 101, the present invention suggests to use either a functionality ID or an application programming interface:
{LUI}/{service_name}, {LUI}/{deployment_location}/{service_name}, {LUI}/{service_ID}.

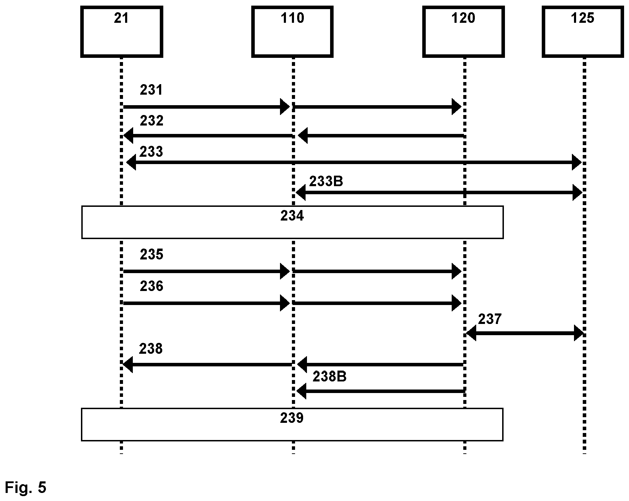

Figure 5 schematically illustrates a communication diagram showing a context storage for a disaggregated functionality. Figure 5 corresponds to a communication diagram between the user equipment or terminal device 21, the access network 110, the core network 120, and a context storage entity or functionality (or context database) 125. In a first processing step 231, a network registration request is transmitted, by the user equipment or terminal device 21, to the access network 110 and/or core network 120. In a second processing step 232, a registration accept message (comprising a storage identifier and/or an endpoint) is transmitted to the user equipment or terminal device 21. In a third processing step 233, a context synchronization is performed between the context storage entity or functionality 125 and the user equipment or terminal device 21. In a further part 233B of the third processing step, a context synchronization is performed between the context storage entity or functionality 125 and the access network 110. In a fourth processing step 234, a protocol data unit session establishment is performed, typically comprising a deployment of user equipment route selection policy information at the user equipment or terminal device 21, as well as a configuration change, wherein all state changes are synchronized with the telecommunications network 100. In a fifth processing step 235 the user equipment or terminal device 21 de-registers from the telecommunications network 100 by means of a corresponding message towards the access network 110 and the core network 120. In a sixth processing step 236, the user equipment or terminal device 21 re-registers again at the telecommunications network 100 by means of a corresponding message towards the access network 110 and the core network 120. In a seventh processing step 237, a context retrieval is performed from the context storage entity or functionality 125 and the core network 120. In an eighth processing step 238, registration acceptance is transmitted to the user equipment or terminal device 21, and, in a processing step 238B, to the access network 110, especially comprising a context storage identifier and/or an endpoint of the existing context. In a ninth processing step 239, the user equipment or terminal device 21 is able to communicate without any need to re-establish a prior protocol data unit session, to re-send user equipment route selection policy information.

Hence, it is advantageously possible and preferred according to the present invention that external storage of a user equipment state (or terminal device state) and/or functionality state in a separate functionality, such as a context storage entity or functionality 125. Hence, a state storage function for user equipment state information tasked with keeping the current state of the user equipment (or terminal device 21) is proposed. In order to support typical functionality such as PDU session establishment, user equipment context restoration is performed not only at the user equipment or terminal device 21 but also at the access network 110.

In the following, several use cases according to the present invention are exemplarily shown or mentioned that are advantageously able to be realized with the proposed architecture, i.e. based on logical user equipments according to the present invention:

Distributed deployment of user plane-related user equipment functionality: According to the present invention, it is advantageously possible to provide for a disaggregation of session management; such offloading advantageously leads to a flexible deployment and termination of the user plane in the network (Core, Edge, RAN). Therefore, applications which have very high demands on computing, software and power resources are able to be handled in the network. Also, software updates and data consumption can be limited; examples for such applications are: VR/AR (virtual reality/augmented reality) applications, 3D-holograms, 3D-rendering.

When user plane-related functionality is placed within the network (i.e. offloaded from the user equipment or terminal device 21), network components (of the access network 110 and/or the core network 120) will necessarily have to route data packets towards the location of such offloaded functionality instead of via the normal path (i.e. especially the air interface) towards the user equipment or terminal device 21, hence saving capacity not only at the user equipment or terminal device 21 but also on the air interface. Especially, for a protocol data unit session established with a logical user equipment functionality that is not located at the physical user equipment (or terminal device 21), this means:
-- for functionality placed at the access network or radio access network 110, the core network 120 forwards the traffic (in a normal manner) towards the access network (e.g., via the N3 interface, which is the data plane interface between the user plane function (e.g UPF) and a base station entity (e.g. gNB); however, the receiving gNB will have to forward the traffic towards the disaggregated functionality instead of via the Uu interface towards the user equipment or terminal device 21. In this case, the PDU session is, transparently to the core network, terminated at the radio access network.
-- for functionality placed at the core network 120, the protocol data unit session anchor (PSA) receiving data from a data network 131 needs to re-route the traffic within the core network (or, if the disaggregated user equipment functionality resides within the user plane function, within the user plane function itself) instead of towards the radio access network. With respect to this traffic, a protocol data unit session (e.g. PDU session) over the radio access network (e.g Uu and the related N3 interface) is not even necessary.

Pooling of similar user equipment functionality:
According to the present invention, it is furthermore advantageously possible to provide for a disaggregation of control plane and/or user plane of devices with limited hardware resources; this can especially be beneficial, as there is a high number of such devices with similar functions e.g. internet-of-things devices, residential gateway fixed network devices. Especially, it is advantageously possible to share resources between several users for control plane and user plane:
A given functionality A is able to be pooled for all logical user equipments in the core network 120 (e.g. closer to the data network 131, leading to a more energy-efficient deployment),
or a given functionality B is able to be pooled differently for given logical user equipments; in this case, a logical user equipment have this functionality B deployed at the radio access network 110 (e.g. policy requiring low latency between physical user equipment and the functionality) while for another logical user equipment, this functionality B is placed in the core network 120 (e.g. in view of a focus on a low-footprint deployment).

Cross-network deployment of user equipment functionality:
According to the present invention, it is furthermore advantageously possible to provide for applications with physical, network operator or legal geographical limitations like e.g. broadcasting, slicing, virtual private networks, satellite networks, such applications especially having the tendency to benefit from a flexible user plane deployment.
In this case, while the logical user equipment is, as seen from outside of the 5G system, within the 5G system, certain user equipment functionality can be placed with a different operator, i.e., typically, within a different telecommunications network. A direct connection between both operators or telecommunications networks (implementing a similar concept as in roaming) is possible, however, a data network between the two (e.g. connection via Internet) is also possible and preferred.

Use of other physical user equipments to deploy or disaggregate user equipment functionality:
According to the present invention, it is furthermore advantageously possible to use the logical user equipment identifier information for using more than one physical user equipment to deploy a user equipment functionality.
Simply using the identifier (e.g. IMEI/PEI) of a physical user equipment to identify the logical user equipment would not allow this. According to the present invention, the following options are proposed:
-- "primary physical user equipment": According to such an embodiment, the address of one of the physical user equipments (pUE) is used, the others being set as a secondary physical user equipment;
-- new identifier used to identify the logical user equipment: Since the logical user equipment only makes sense when considered together with the network it is attached to, it is advantageous (e.g. for inter-network signaling) if the logical user equipment identifier information contains the network identifier.

Related to the logical user equipment identifier information: The radio access network, and core network require - so as to be able to route messages and/or data traffic to user equipment functionality - an association between user equipment functionality and a given logical user equipment identifier information and where the functionality is placed (e.g. which physical user equipment, network part, addressable server and/or network function).

User equipment exposing functionality not implemented within the user equipment:
According to the present invention, it is furthermore advantageously possible that the user equipment exposes functionality which can or are mandated to offload at the network (radio access network, edge, core network, third party entity) depending on configuration (vendor, operator, user profile, third party) services are created dynamically; the user equipment needs to establish and use a connection to these services related also to application usage; via an application or user interface forwarding via control plane, the user is able to utilize the services via the logical user equipment.

Offload of non-access stratum and session management service:
According to the present invention, it is furthermore advantageously possible to provide for a possibility to offload non-access stratum and session management service, especially by means of conducting the following processing steps:
-- the user equipment (or terminal device 21) is registering to the network;
-- based on network and/or user equipment configuration, the service disaggregation is taking place, e.g session management functions for an augmented reality application;
-- the logical user equipment identifier information is assigned to the offloaded non-access stratum service; this new LUI especially consists of the original user equipment identifier information and a new associated offloaded service identifier information:
-- state information has to be stored in network and be synchronized with the user equipment;
-- service execution: this can consist of a single or multiple services and can also trigger user plane interactions, e.g. session management is executed in network in order to establish a data connection to an augmented reality or virtual reality service (AR/VR) which is also terminated in the network directly;
-- the user equipment is (especially via state synchronization) informed and can provide this information to upper application layer (e.g. this can trigger another part like data collectors or data exchange via other channels like SMS, NAS as etc.. );
-- terminate the service; this can be triggered by the network or application; all parties are informed by sync of the state database and the unique service ID will be deleted.

Application to existing 5G user equipment functionality:
According to the present invention, it is furthermore advantageously possible to apply the inventive concept to non-access stratum procedures: To communicate with a core network, a current 5G user equipment consists of different control plane functions for 5G access. These are the non-access stratum procedures which are grouped in two categories and are potential candidates for the service disaggregation according to the present invention:
-- Mobility Management (MM): These procedures related to mobility over an access, authentication and security:
   -- GUTI (Global Unique Temporary ID) reallocation
   -- Authentication
   -- Security mode control
   -- Identification
   -- Service request: initiated by the user equipment to start the establishment of non-access stratum signalling connection
   -- Paging: initiated by the network
   -- Transport of non-access stratum messages: used for SMS
   -- Generic transport of non-access stratum messages: Various other applications
-- Session Management (SM): Session Management protocol offers support to the establishment and handling of user data in the non-access stratum :
   -- requests for packet data network connection establishment and disconnection,
   -- requests for resources allocation and modification
   -- release requests.

Session management for certain services can be used as an example to be offloaded from user equipment into the network. This requires the following preconditions:
-- Configuration setup from network and/or user equipment for which service and in which application content will be offloaded.
-- Service description and configuration including quality-of-service, authentication and/or authorization.
-- An new unique ID to identify the offloaded service in the network and is connected to the original user equipment identity.
-- A place to store state information and which can be synchronized with the user equipment state, .i.e the user equipment has to be informed and/or update service state changes.

## Claims

1. Method for using a system comprising a terminal device (21) and a telecommunications network (100), wherein the telecommunications network (100) comprises an access network (110) and a core network (120), wherein, regarding a specific user equipment functionality, the telecommunications network (100) initializes or provides a logical user equipment entity or functionality (101) such that the terminal device (21), together with the logical user equipment entity or functionality (101), provides or realizes or is able to provide or realize the specific user equipment functionality,
wherein the method comprises the following steps:
-- in a first step, a logical user equipment identifier information is assigned by a network node of the telecommunications network (100) to the terminal device (21), wherein the logical user equipment identifier information comprises a network identifier information, a permanent equipment identifier information related to the terminal device (21), and an identifier information relating to the logical user equipment entity or functionality (101),
-- in a second step, subsequent to the first step, the logical user equipment identifier information is transmitted by the network node of the telecommunications network (100) to the terminal device (21),
wherein, in a step preceding the first step, the terminal device (21) transmits a disaggregation request message to the telecommunications network (100), the disaggregation request message being related to the specific user equipment functionality and/or requirements of the specific user equipment functionality, wherein the logical user equipment identifier information is assigned to the terminal device (21) and transmitted to the terminal device (21) depending on the requested disaggregation of the specific user equipment functionality, and wherein the telecommunications network (100) assigns or defines a location or a resource for implementing or realizing the disaggregation of the requested specific user equipment functionality, wherein the telecommunications network (100) informs the terminal device (21) about disaggregated services and pushes this information to the upper application layer, wherein a temporary identity is assigned by the telecommunications network (100) to the disaggregated specific user equipment functionality, the temporary identity being related to or combined with the logical user equipment identifier information.

2. Method according to claim 1, wherein the logical user equipment identifier information is assigned and transmitted to the terminal device (21) depending on a profile information related to the terminal device (21) and/or to the respective subscription.

3. Method according to one of the preceding claims, wherein, regarding the specific user equipment functionality, the logical user equipment entity or functionality (101) is initialized or provided in view of being able to provide or realize, together with the terminal device (21), the requested specific user equipment functionality,
wherein, in a third step subsequent of the second step, the logical user equipment entity or functionality (101) enters a functional state corresponding to a specific context information related to the requested specific user equipment functionality,
wherein in a fourth step subsequent to the third step and especially upon a re-registration of the terminal device (21), the specific context information is used to establish the functional state of the requested specific user equipment functionality such that the terminal device (21), together with the logical user equipment entity or functionality (101), provides or realizes the specific user equipment functionality,
wherein the specific context information is especially stored in a context database of or associated with the telecommunications network (100).

4. Method according to one of the preceding claims, wherein the logical user equipment entity or functionality (101) is identified by means of a functionality instance identifier information, the functionality instance identifier information comprising the logical user equipment identifier information and a functionality identifier information, the functionality identifier information especially referring to the specific user equipment functionality.

5. Method according to one of the preceding claims, wherein the specific user equipment functionality is localized in the access network (110) or in the core network (120) of the telecommunications network (100),
wherein in case that the specific user equipment functionality is localized in the access network (110), especially in a base station entity of the access network (110) and especially using the N3 interface, a protocol data unit session is terminated at the access network (110),
wherein in case that the specific user equipment functionality is localized in the core network (120), a protocol data unit session is not required,
wherein the specific user equipment functionality especially is or corresponds to a session management functionality, especially a user plane-related functionality.

6. Method according to one of the preceding claims, wherein the specific user equipment functionality is realized by means of pooling, for the terminal device (21) and at least one further terminal device (22), of the logical user equipment entity or functionality (101).

7. Method according to one of the preceding claims, wherein the specific user equipment functionality is realized by means of using, in addition to the telecommunications network (100), a further telecommunications network (200) or at least a further core network (220) of a further telecommunications network (200), especially wherein the logical user equipment identifier information comprises network identifier information of the further telecommunications network (200).

8. Method according to one of the preceding claims, wherein the logical user equipment entity or functionality (101) is related to the terminal device (21) and to a further terminal device (22),
wherein the logical user equipment entity or functionality (101) provides or realizes the specific user equipment functionality together with the terminal device (21), and a further specific user equipment functionality together with the further terminal device (22).

9. Method according to one of the preceding claims, wherein the specific user equipment functionality corresponds to a functionality that the terminal device (21) is unable to provide or realize without the logical user equipment entity or functionality (101).

10. Telecommunications network (100) for initializing or providing a logical user equipment entity or functionality (101) such that a terminal device (21), together with the logical user equipment entity or functionality (101), provides or realizes or is able to provide or realize a specific user equipment functionality, wherein the telecommunications network (100) comprises an access network (110) and a core network (120),
wherein a network node of the telecommunications network (100) is configured to:
-- assign a logical user equipment identifier information to the terminal device (21), wherein the logical user equipment identifier information comprises a network identifier information, a permanent equipment identifier information related to the terminal device (21), and an identifier information relating to the logical user equipment entity or functionality (101),
-- transmit the logical user equipment identifier information to the terminal device (21),
wherein the telecommunications network (100) is configured to receive from the terminal device (21) - prior to the assignment of the logical user equipment identifier information - a disaggregation request message, the disaggregation request message being related to the specific user equipment functionality and/or requirements of the specific user equipment functionality, wherein the network node of the telecommunications network (100) is configured to assign and transmit the logical user equipment identifier information to the terminal device (21) depending on the requested disaggregation of the specific user equipment functionality,
and wherein the telecommunications network (100) is configured to assign or define a location or a resource for implementing or realizing the disaggregation of the requested specific user equipment functionality, wherein the telecommunications network (100) is further configured to inform the terminal device (21) about disaggregated services and to push this information to the upper application layer, wherein the telecommunications network (100) is configured to assign a temporary identity to the disaggregated specific user equipment functionality, the temporary identity being related to or combined with the logical user equipment identifier information.

11. Terminal device (21) for providing or realizing a specific user equipment functionality together with a logical user equipment entity or functionality (101) initialized or provided by a telecommunications network (100),
wherein the terminal device (21) is configured to:
-- receive a logical user equipment identifier information from a network node of the telecommunications network (100), wherein the logical user equipment identifier information is assigned by the telecommunications network (100) and comprises a network identifier information, a permanent equipment identifier information related to the terminal device (21), and an identifier information relating to the logical user equipment entity or functionality (101),
-- transmit to the telecommunications network (100) - prior to the assignment of the logical user equipment identifier information - a disaggregation request message, the disaggregation request message being related to the specific user equipment functionality and/or requirements of the specific user equipment functionality,
-- receive from the telecommunications network (100) information about disaggregated services, this information being pushed by the telecommunications network (100) to the upper application layer.

12. System comprising a telecommunications network (100) according to claim 10 and a terminal device (21) according to claim 11.

13. Program comprising a computer readable program code which, when executed in a system according to claim 12, causes the system to perform a method according one of claims 1 to 9.

14. Computer-readable medium comprising instructions which, when executed in a system according to claim 12, causes the system to perform a method according one of claims 1 to 9.

## Patentansprüche

1. Verfahren zur Verwendung eines Systems, umfassend ein Endgerät (21) und ein Telekommunikationsnetz (100), wobei das Telekommunikationsnetz (100) ein Zugangsnetz (110) und ein Kernnetz (120) umfasst, wobei, in Bezug auf eine spezifische Benutzerausrüstungsfunktionalität, das Telekommunikationsnetz (100) eine logische Benutzerausrüstungsentität oder -funktionalität (101) initialisiert oder bereitstellt, dergestalt, dass das Endgerät (21), zusammen mit der logischen Benutzerausrüstungsentität oder -funktionalität (101), die spezifische Benutzerausrüstungsfunktionalität bereitstellt oder realisiert oder in der Lage ist, sie bereitzustellen oder zu realisieren,
wobei das Verfahren die folgenden Schritte umfasst:
- in einem ersten Schritt wird dem Endgerät (21) durch einen Netzknoten des Telekommunikationsnetzes (100) eine logische Benutzerausrüstungs-Kennungsinformation zugewiesen, wobei die logische Benutzerausrüstungs-Kennungsinformation eine Netz-Kennungsinformation, eine permanente Ausrüstungs-Kennungsinformation, die sich auf das Endgerät (21) bezieht, und eine Kennungsinformation, die sich auf die logische Benutzerausrüstungsentität oder -funktionalität (101) bezieht, umfasst,
- in einem zweiten Schritt, im Anschluss an den ersten Schritt, wird die logische Benutzerausrüstungs-Kennungsinformation durch den Netzknoten des Telekommunikationsnetzes (100) an das Endgerät (21) übertragen,
wobei in einem Schritt, der dem ersten Schritt vorausgeht, das Endgerät (21) eine Disaggregationsanforderungsnachricht an das Telekommunikationsnetz (100) sendet, wobei sich die Disaggregationsanforderungsnachricht auf die spezifische Benutzerausrüstungsfunktionalität und/oder Anforderungen der spezifischen Benutzerausrüstungsfunktionalität bezieht,
wobei die logische Benutzerausrüstungs-Kennungsinformation dem Endgerät (21) zugewiesen und an das Endgerät (21) in Abhängigkeit von der angeforderten Disaggregation der spezifischen Benutzerausrüstungsfunktionalität gesendet wird,
und wobei das Telekommunikationsnetz (100) einen Ort oder eine Ressource zum Implementieren oder Realisieren der Disaggregation der angeforderten spezifischen Benutzerausrüstungsfunktionalität zuweist oder definiert, wobei das Telekommunikationsnetz (100) das Endgerät (21) über disaggregierte Dienste informiert und diese Informationen zu der oberen Anwendungsschicht schiebt, wobei der disaggregierten spezifischen Benutzerausrüstungsfunktionalität durch das Telekommunikationsnetz (100) eine temporäre Identität zugewiesen wird, wobei sich die temporäre Identität auf die logische Benutzerausrüstungs-Kennungsinformation bezieht oder mit dieser kombiniert wird.

2. Verfahren nach Anspruch 1, wobei dem Endgerät (21) die logische Benutzerausrüstungs-Kennungsinformation in Abhängigkeit von einer Profilinformation, die sich auf das Endgerät (21) und/oder die jeweilige Subskription bezieht, zugewiesen und zugesendet wird.

3. Verfahren nach einem der vorangehenden Ansprüche, wobei in Bezug auf die spezifische Benutzerausrüstungsfunktionalität die logische Benutzerausrüstungsentität oder -funktionalität (101) initialisiert oder bereitgestellt wird, um, zusammen mit dem Endgerät (21), die angeforderte spezifische Benutzerausrüstungsfunktionalität bereitstellen oder realisieren zu können,
wobei in einem dritten Schritt, im Anschluss an den zweiten Schritt, die logische Benutzerausrüstungsentität oder -funktionalität (101) in einen Funktionszustand eintritt, der einer spezifischen Kontextinformation entspricht, die sich auf die angeforderte spezifische Benutzerausrüstungsfunktionalität bezieht,
wobei in einem vierten Schritt, im Anschluss an den dritten Schritt, und insbesondere bei einer erneuten Registrierung des Endgerätes (21), die spezifischen Kontextinformationen verwendet werden, um den Funktionszustand der angeforderten spezifischen Benutzerausrüstungsfunktionalität herzustellen, dergestalt, dass das Endgerät (21), zusammen mit der logischen Benutzerausrüstungsentität oder -funktionalität (101), die spezifische Benutzerausrüstungsfunktionalität bereitstellt oder realisiert,
wobei die spezifischen Kontextinformationen insbesondere in einer Kontextdatenbank gespeichert sind, die dem Telekommunikationsnetz (100) gehört oder mit dem Telekommunikationsnetz (100) verknüpft ist.

4. Verfahren nach einem der vorangehenden Ansprüche, wobei die logische Benutzerausrüstungsentität oder -funktionalität (101) mittels einer Funktionalitätsinstanz-Kennungsinformation identifiziert wird, wobei die Funktionalitätsinstanz-Kennungsinformation die logische Benutzerausrüstungs-Kennungsinformation und eine Funktionalitäts-Kennungsinformation umfasst, wobei sich die Funktionalitäts-Kennungsinformation insbesondere auf die spezifische Benutzerausrüstungsfunktionalität bezieht.

5. Verfahren nach einem der vorangehenden Ansprüche, wobei sich die spezifische Benutzerausrüstungsfunktionalität in dem Zugangsnetz (110) oder in dem Kernnetz (120) des Telekommunikationsnetzes (100) befindet,
wobei für den Fall, dass sich die spezifische Benutzerausrüstungsfunktionalität in dem Zugangsnetz (110), insbesondere in einer Basisstationsentität des Zugangsnetzes (110), befindet und insbesondere die N3-Schnittstelle verwendet, eine Protokolldateneinheitssitzung in dem Zugangsnetz (110) terminiert wird,
wobei für den Fall, dass sich die spezifische Benutzerausrüstungsfunktionalität in dem Kernnetz (120) befindet, eine Protokolldateneinheitssitzung nicht erforderlich ist,
wobei die spezifische Benutzerausrüstungsfunktionalität insbesondere eine Sitzungsmanagementfunktionalität, insbesondere eine benutzerebenenbezogene Funktionalität, ist oder dieser entspricht.

6. Verfahren nach einem der vorangehenden Ansprüche, wobei die spezifische Benutzerausrüstungsfunktionalität mittels Pooling, für das Endgerät (21) und mindestens ein weiteres Endgerät (22), der logischen Benutzerausrüstungsentität oder -funktionalität (101) realisiert wird.

7. Verfahren nach einem der vorangehenden Ansprüche, wobei die spezifische Benutzerausrüstungsfunktionalität mittels der Verwendung, zusätzlich zu dem Telekommunikationsnetz (100), eines weiteren Telekommunikationsnetzes (200) oder mindestens eines weiteren Kernnetzes (220) eines weiteren Telekommunikationsnetzes (200) realisiert wird, wobei insbesondere die logische Benutzerausrüstungs-Kennungsinformation Netzkennungsinformationen des weiteren Telekommunikationsnetzes (200) umfasst.

8. Verfahren nach einem der vorangehenden Ansprüche, wobei sich die logische Benutzerausrüstungsentität oder -funktionalität (101) auf das Endgerät (21) und ein weiteres Endgerät (22) bezieht,
wobei die logische Benutzerausrüstungsentität oder -funktionalität (101) die spezifische Benutzerausrüstungsfunktionalität zusammen mit dem Endgerät (21) und eine weitere spezifische Benutzerausrüstungsfunktionalität zusammen mit dem weiteren Endgerät (22) bereitstellt oder realisiert.

9. Verfahren nach einem der vorangehenden Ansprüche, wobei die spezifische Benutzerausrüstungsfunktionalität einer Funktionalität entspricht, die das Endgerät (21) ohne die logische Benutzerausrüstungsentität oder -funktionalität (101) nicht bereitstellen oder realisieren kann.

10. Telekommunikationsnetz (100) zum Initialisieren oder Bereitstellen einer logischen Benutzerausrüstungsentität oder -funktionalität (101), dergestalt, dass ein Endgerät (21), zusammen mit der logischen Benutzerausrüstungsentität oder -funktionalität (101), eine spezifische Benutzerausrüstungsfunktionalität bereitstellt oder realisiert oder in der Lage ist, diese bereitzustellen oder zu realisieren, wobei das Telekommunikationsnetz (100) ein Zugangsnetz (110) und ein Kernnetz (120) umfasst,
wobei ein Netzknoten des Telekommunikationsnetzes (100) eingerichtet ist zum:
- Zuweisen einer logischen Benutzerausrüstungs-Kennungsinformation zu dem Endgerät (21), wobei die logische Benutzerausrüstungs-Kennungsinformation eine Netz-Kennungsinformation, eine permanente Ausrüstungs-Kennungsinformation, die sich auf das Endgerät (21) bezieht, und eine Kennungsinformation, die sich auf die logische Benutzerausrüstungsentität oder -funktionalität (101) bezieht, umfasst,
- Senden der logischen Benutzerausrüstungs-Kennungsinformation an das Endgerät (21),
wobei das Telekommunikationsnetz (100) dafür eingerichtet ist, von dem Endgerät (21) - vor der Zuweisung der logischen Benutzerausrüstungs-Kennungsinformation - eine Disaggregationsanforderungsnachricht zu empfangen, wobei sich die Disaggregationsanforderungsnachricht auf die spezifische Benutzerausrüstungsfunktionalität und/oder Anforderungen der spezifischen Benutzerausrüstungsfunktionalität bezieht,
wobei der Netzknoten des Telekommunikationsnetzes (100) dafür eingerichtet ist, dem Endgerät (21) die logische Benutzerausrüstungs-Kennungsinformation in Abhängigkeit von der angeforderten Disaggregation der spezifischen Benutzerausrüstungsfunktionalität zuzuweisen und zuzusenden,
und wobei das Telekommunikationsnetz (100) dafür eingerichtet ist, einen Ort oder eine Ressource zum Implementieren oder Realisieren der Disaggregation der angeforderten spezifischen Benutzerausrüstungsfunktionalität zuzuweisen oder zu definieren, wobei das Telekommunikationsnetz (100) des Weiteren dafür eingerichtet ist, das Endgerät (21) über disaggregierte Dienste zu informieren und diese Informationen der oberen Anwendungsschicht zuzuschieben, wobei das Telekommunikationsnetz (100) dafür eingerichtet ist, der disaggregierten spezifischen Benutzerausrüstungsfunktionalität eine temporäre Identität zuzuweisen, wobei sich die temporäre Identität auf die logische Benutzerausrüstungs-Kennungsinformation bezieht oder mit dieser kombiniert wird.

11. Endgerät (21) zum Bereitstellen oder Realisieren einer spezifischen Benutzerausrüstungsfunktionalität zusammen mit einer logischen Benutzerausrüstungsentität oder -funktionalität (101), die durch ein Telekommunikationsnetz (100) initialisiert oder bereitgestellt wird,
wobei das Endgerät (21) eingerichtet ist zum:
- Empfangen einer logischen Benutzerausrüstungs-Kennungsinformation von einem Netzknoten des Telekommunikationsnetzes (100), wobei die logische Benutzerausrüstungs-Kennungsinformation durch das Telekommunikationsnetz (100) zugewiesen wird und eine Netzkennungsinformation, eine permanente Ausrüstungs-Kennungsinformation, die sich auf das Endgerät (21) bezieht, und eine Kennungsinformation, die sich auf die logische Benutzerausrüstungsentität oder -funktionalität (101) bezieht, umfasst,
- Senden, an das Telekommunikationsnetz (100) - vor der Zuweisung der logischen Benutzerausrüstungs-Kennungsinformationen - einer Disaggregationsanforderungsnachricht, wobei sich die Disaggregationsanforderungsnachricht auf die spezifische Benutzerausrüstungsfunktionalität und/oder Anforderungen der spezifischen Benutzerausrüstungsfunktionalität bezieht,
- Empfangen, von dem Telekommunikationsnetz (100), von Informationen über disaggregierte Dienste, wobei diese Informationen durch das Telekommunikationsnetz (100) zu der oberen Anwendungsschicht geschoben werden.

12. System, umfassend ein Telekommunikationsnetz (100) nach Anspruch 10 und ein Endgerät (21) nach Anspruch 11.

13. Programm, umfassend einen computerlesbaren Programmcode, der, wenn er in einem System nach Anspruch 12 ausgeführt wird, das System veranlasst, ein Verfahren nach einem der Ansprüche 1 bis 9 durchzuführen.

14. Computerlesbares Medium, umfassend Instruktionen, die, wenn sie in einem System nach Anspruch 12 ausgeführt werden, das System veranlassen, ein Verfahren nach einem der Ansprüche 1 bis 9 durchzuführen.

## Revendications

1. Procédé d'utilisation d'un système comprenant un dispositif terminal (21) et un réseau de télécommunications (100), dans lequel le réseau de télécommunications (100) comprend un réseau d'accès (110) et un réseau central (120),
dans lequel, concernant une fonctionnalité d'équipement utilisateur spécifique, le réseau de télécommunications (100) initialise ou fournit une entité ou fonctionnalité d'équipement utilisateur logique (101) de telle sorte que le dispositif terminal (21), conjointement avec l'entité ou fonctionnalité d'équipement utilisateur logique (101), fournit ou réalise ou est capable de fournir ou de réaliser la fonctionnalité d'équipement utilisateur spécifique, dans lequel le procédé comprend les étapes suivantes :
- dans une première étape, une information d'identificateur d'équipement utilisateur logique est attribuée par un noeud de réseau du réseau de télécommunications (100) au dispositif terminal (21), dans lequel l'information d'identificateur d'équipement utilisateur logique comprend une information d'identificateur de réseau, une information d'identificateur d'équipement permanent liée au dispositif terminal (21), et une information d'identificateur relative à l'entité ou fonctionnalité d'équipement utilisateur logique (101),
- dans une deuxième étape, consécutive à la première étape, l'information d'identificateur d'équipement utilisateur logique est transmise par le noeud de réseau du réseau de télécommunications (100) au dispositif terminal (21),
dans lequel, dans une étape précédant la première étape, le dispositif terminal (21) transmet un message de demande de désagrégation au réseau de télécommunications (100), le message de demande de désagrégation étant lié à la fonctionnalité d'équipement utilisateur spécifique et/ou à des exigences de la fonctionnalité d'équipement utilisateur spécifique, dans lequel l'information d'identificateur d'équipement utilisateur logique est attribuée au dispositif terminal (21) et transmise au dispositif terminal (21) en fonction de la désagrégation demandée de la fonctionnalité d'équipement utilisateur spécifique, et dans lequel le réseau de télécommunications (100) attribue ou définit un emplacement ou une ressource pour mettre en œuvre ou réaliser la désagrégation de la fonctionnalité d'équipement utilisateur spécifique demandée, dans lequel le réseau de télécommunications (100) informe le dispositif terminal (21) de services désagrégés et transmet cette information à la couche d'application supérieure, dans lequel une identité temporaire est attribuée par le réseau de télécommunications (100) à la fonctionnalité d'équipement utilisateur spécifique désagrégée, l'identité temporaire étant liée à l'information d'identificateur d'équipement utilisateur logique ou combinée avec celle-ci .

2. Procédé selon la revendication 1, dans lequel l'information d'identificateur d'équipement utilisateur logique est attribuée et transmise au dispositif terminal (21) en fonction d'une information de profil liée au dispositif terminal (21) et/ou à l'abonnement respectif.

3. Procédé selon l'une des revendications précédentes, dans lequel, concernant la fonctionnalité d'équipement utilisateur spécifique, l'entité ou fonctionnalité d'équipement utilisateur logique (101) est initialisée ou fournie en vue de pouvoir fournir ou réaliser, conjointement avec le dispositif terminal (21), la fonctionnalité d'équipement utilisateur spécifique demandée,
dans lequel, dans une troisième étape consécutive à la deuxième étape, l'entité ou fonctionnalité d'équipement utilisateur logique (101) entre dans un état fonctionnel correspondant à une information de contexte spécifique liée à la fonctionnalité d'équipement utilisateur spécifique demandée,
dans lequel, dans une quatrième étape consécutive à la troisième étape et notamment lors d'un réenregistrement du dispositif terminal (21), l'information de contexte spécifique est utilisée pour établir l'état fonctionnel de la fonctionnalité d'équipement utilisateur spécifique demandée de telle sorte que le dispositif terminal (21), conjointement avec l'entité ou fonctionnalité d'équipement utilisateur logique (101), fournit ou réalise la fonctionnalité d'équipement utilisateur spécifique,
dans lequel l'information de contexte spécifique est stockée en particulier dans une base de données de contextes du réseau de télécommunications (100) ou associée à celui-ci.

4. Procédé selon l'une des revendications précédentes, dans lequel l'entité ou fonctionnalité d'équipement utilisateur logique (101) est identifiée au moyen d'une information d'identificateur d'instance de fonctionnalité, l'information d'identificateur d'instance de fonctionnalité comprenant l'information d'identificateur d'équipement utilisateur logique et une information d'identificateur de fonctionnalité, l'information d'identificateur de fonctionnalité se rapportant en particulier à la fonctionnalité d'équipement utilisateur spécifique.

5. Procédé selon l'une des revendications précédentes, dans lequel la fonctionnalité d'équipement utilisateur spécifique est localisée dans le réseau d'accès (110) ou dans le réseau central (120) du réseau de télécommunications (100),
dans lequel, dans le cas où la fonctionnalité d'équipement utilisateur spécifique est localisée dans le réseau d'accès (110), en particulier dans une entité de station de base du réseau d'accès (110) et en particulier utilisant l'interface N3, une session d'unité de données de protocole est terminée au niveau du réseau d'accès (110),
dans le cas où la fonctionnalité d'équipement utilisateur spécifique est localisée dans le réseau central (120), une session d'unité de données de protocole n'est pas requise, dans lequel la fonctionnalité d'équipement utilisateur spécifique est ou correspond en particulier à une fonctionnalité de gestion de session, en particulier une fonctionnalité liée au plan utilisateur.

6. Procédé selon l'une des revendications précédentes, dans lequel la fonctionnalité d'équipement utilisateur spécifique est réalisée au moyen d'un groupage, pour le dispositif terminal (21) et au moins un autre dispositif terminal (22), de l'entité ou fonctionnalité d'équipement utilisateur logique (101).

7. Procédé selon l'une des revendications précédentes, dans lequel la fonctionnalité d'équipement utilisateur spécifique est réalisée en utilisant, en plus du réseau de télécommunications (100), un autre réseau de télécommunications (200) ou au moins un autre réseau central (220) d'un autre réseau de télécommunications (200), en particulier dans lequel l'information d'identificateur d'équipement utilisateur logique comprend une information d'identificateur de réseau de l'autre réseau de télécommunications (200).

8. Procédé selon l'une des revendications précédentes, dans lequel l'entité ou fonctionnalité d'équipement utilisateur logique (101) est liée au dispositif terminal (21) et à un autre dispositif terminal (22),
dans lequel l'entité ou fonctionnalité d'équipement utilisateur logique (101) fournit ou réalise la fonctionnalité d'équipement utilisateur spécifique conjointement avec le dispositif terminal (21), et une autre fonctionnalité d'équipement utilisateur spécifique conjointement avec l'autre dispositif terminal (22).

9. Procédé selon l'une des revendications précédentes, dans lequel la fonctionnalité d'équipement utilisateur spécifique correspond à une fonctionnalité que le dispositif terminal (21) n'est pas en mesure de fournir ou de réaliser sans l'entité ou fonctionnalité d'équipement utilisateur logique (101).

10. Réseau de télécommunications (100) pour initialiser ou fournir une entité ou fonctionnalité d'équipement utilisateur logique (101) de telle sorte qu'un dispositif terminal (21), conjointement avec l'entité ou fonctionnalité d'équipement utilisateur logique (101), fournit ou réalise ou est capable de fournir ou de réaliser une fonctionnalité d'équipement utilisateur spécifique, dans lequel le réseau de télécommunications (100) comprend un réseau d'accès (110) et un réseau central (120),
dans lequel un noeud de réseau du réseau de télécommunications (100) est configuré pour :
- attribuer une information d'identificateur d'équipement utilisateur logique au dispositif terminal (21), dans lequel l'information d'identificateur d'équipement utilisateur logique comprend une information d'identificateur de réseau, une information d'identificateur d'équipement permanent liée au dispositif terminal (21), et une information d'identificateur relative à l'entité ou fonctionnalité d'équipement utilisateur logique (101),
- transmettre l'information d'identificateur d'équipement utilisateur logique au dispositif terminal (21),
dans lequel le réseau de télécommunications (100) est configuré pour recevoir à partir du dispositif terminal (21) - avant l'attribution de l'information d'identificateur d'équipement utilisateur logique - un message de demande de désagrégation, le message de demande de désagrégation étant lié à la fonctionnalité d'équipement utilisateur spécifique et/ou à des exigences de la fonctionnalité d'équipement utilisateur spécifique, dans lequel le noeud de réseau du réseau de télécommunications (100) est configuré pour attribuer et transmettre l'information d'identificateur d'équipement utilisateur logique au dispositif terminal (21) en fonction de la désagrégation demandée de la fonctionnalité d'équipement utilisateur spécifique,
et dans lequel le réseau de télécommunications (100) est configuré pour attribuer ou définir un emplacement ou une ressource pour mettre en œuvre ou réaliser la désagrégation de la fonctionnalité d'équipement utilisateur spécifique demandée, dans lequel le réseau de télécommunications (100) est en outre configuré pour informer le dispositif terminal (21) concernant des services désagrégés et pour transmettre cette information à la couche d'application supérieure, dans lequel le réseau de télécommunications (100) est configuré pour attribuer une identité temporaire à la fonctionnalité d'équipement utilisateur spécifique désagrégée, l'identité temporaire étant liée à l'information d'identification d'équipement utilisateur logique ou combinée avec celle-ci.

11. Dispositif terminal (21) pour fournir ou réaliser une fonctionnalité d'équipement utilisateur spécifique conjointement avec une entité ou fonctionnalité d'équipement utilisateur logique (101) initialisée ou fournie par un réseau de télécommunications (100),
dans lequel le dispositif terminal (21) est configuré pour :
- recevoir une information d'identificateur d'équipement utilisateur logique à partir d'un noeud de réseau du réseau de télécommunications (100), dans lequel l'information d'identificateur d'équipement utilisateur logique est attribuée par le réseau de télécommunications (100) et comprend une information d'identificateur de réseau, une information d'identificateur d'équipement permanent liée au dispositif terminal (21), et une information d'identificateur relative à l'entité ou fonctionnalité d'équipement utilisateur logique (101),
- transmettre au réseau de télécommunications (100) - avant l'attribution de l'information d'identificateur d'équipement utilisateur logique - un message de demande de désagrégation, le message de demande de désagrégation étant lié à la fonctionnalité d'équipement utilisateur spécifique et/ou à des exigences de la fonctionnalité d'équipement utilisateur spécifique,
- recevoir à partir du réseau de télécommunications (100) une information concernant des services désagrégés, cette information étant transmise par le réseau de télécommunications (100) à la couche d'application supérieure.

12. Système comprenant un réseau de télécommunications (100) selon la revendication 10 et un dispositif terminal (21) selon la revendication 11.

13. Programme comprenant un code de programme lisible par ordinateur qui, lorsqu'il est exécuté dans un système selon la revendication 12, amène le système à exécuter un procédé selon l'une des revendications 1 à 9.

14. Support lisible par ordinateur comprenant des instructions qui, lorsqu'elles sont exécutées dans un système selon la revendication 12, amènent le système à exécuter un procédé selon l'une des revendications 1 à 9.
